# EUROPEAN PATENT SPECIFICATION

(11) **EP 1 683 984 B1**
(45) Date of publication and mention of the grant of the patent: **08.03.2017**
(21) Application number: 06001085.7
(22) Date of filing: 19.01.2006
(51) Int. Cl.: F16D 65/12

(54) **Brake for vehicle wheels provided with constraining elements of the elastically operating braking band**
Bremse für Fahrzeugräder mit Haltemitteln für den elastisch wirkenden Bremsring
Frein pour roues de véhicule avec moyens de retenu de l'anneau de freinage à action élastique

(30) Priority: 25.01.2005 IT MI20050016 U
(43) Date of publication of application: 26.07.2006
(73) Proprietor: Sunstar Singapore Pte. Ltd., Singapore 117684 (SG)
(72) Inventor: Greppi, Bruno, 22036 Erba CO (IT); Brioschi, Cesare, 23851 Galbiate LC (IT)
(74) Representative: Locatelli, Massimo

(56) References cited:
- DE-A- 1 775 685
- FR-A- 2 266 052
- JP-U- H0 581 544
- US-A- 4 967 893
- US-A- 5 520 269
- US-A- 6 116 386

## Description

The present invention relates to a brake for vehicle wheels provided with a particular constraining element between the braking band (consisting, for example, of a disc) on which the brake pads and the wheel to be braked act.

In the field of vehicles, in particular of motorcycles, fixing the disc of the brake to the hub of the wheel to be made to brake using a series of constraining elements has been known for some time, for example rivets and studs, spaced at regular intervals along the internal circumference of the disc.

To achieve fixing, each rivet can be received in a suitable generally cylindrical seat defined by a pair of aligned coaxial holes obtained respectively on the hub of the wheel (or on a brake element fixed to the hub) on the braking disc.

Alternatively, each rivet can be received in a seat half defined by a generally semicylindrical concavity obtained on the hub and half defined by a similar semicylindrical concavity obtained on the disc (see, for example, JPH0581544U or US 5,520,269).

In all cases, fixing achieved with prior-art rivets imposes rigid constraining of the disc on the hub at several points, generating some significant drawbacks.

In fact, during braking, great tension inside the braking track of the disc and considerable local temperature increases due to friction are generated; these phenomena may cause local stretching in various zones of the disc. FR-A-2266052 discloses a solution with pairs of semicylindrical concavities, wherein a slight movement is allowed between the hub and disc only in the radial direction.

With a system of stiff constraints defining a series of fixed points for the braking track, the local stretching that originates in the disc may cause permanent deformation and curving that, over the long term, may cause damage to the brake, great noise and undesired vibrations.

US 6,116,386 discloses a disc brake wherein the disc portion is elastically mounted on pins made integral with the hub.

The general object of the present invention is to overcome the aforementioned drawbacks by providing a brake provided with a constraining system between the element that forms the braking track and the wheel to be made to brake such as to absorb the stretching of the braking track due to mechanical or thermal stress, avoiding permanent deformation or undesired curves.

A further object of the present invention is to provide a constraining element that has both a simple and economical structure.

Another object of the present invention is to provide a constraining element that enables the vibrations and noise of the brake to be reduced.

In view of this object it was decided to make, according to the invention, a brake for vehicle wheels having the features recited in claim 1.

In order to make the explanation of the innovative principles of the present invention and its advantages over the prior art clearer, a possible embodiment applying such principles will be disclosed below with the help of the enclosed drawings. In the drawings:
- figure 1 is a view of a disc brake according to the invention,
- figure 2 is a constraining element fixing the disc of the brake to the hub of the wheel, in rest status,
- figure 3 is a constraining element fixing the disc of the brake to the hub of the wheel, in operating status with stretching deformation of the disc,
- figure 4 is a section view of the constraining element in the preceding figures, sectioned along the plane IV-IV in figure 2,
- figure 5 is a view of an alternative embodiment of the constraining element according to the invention, sectioned according to a plane perpendicular to the plane of the disc.

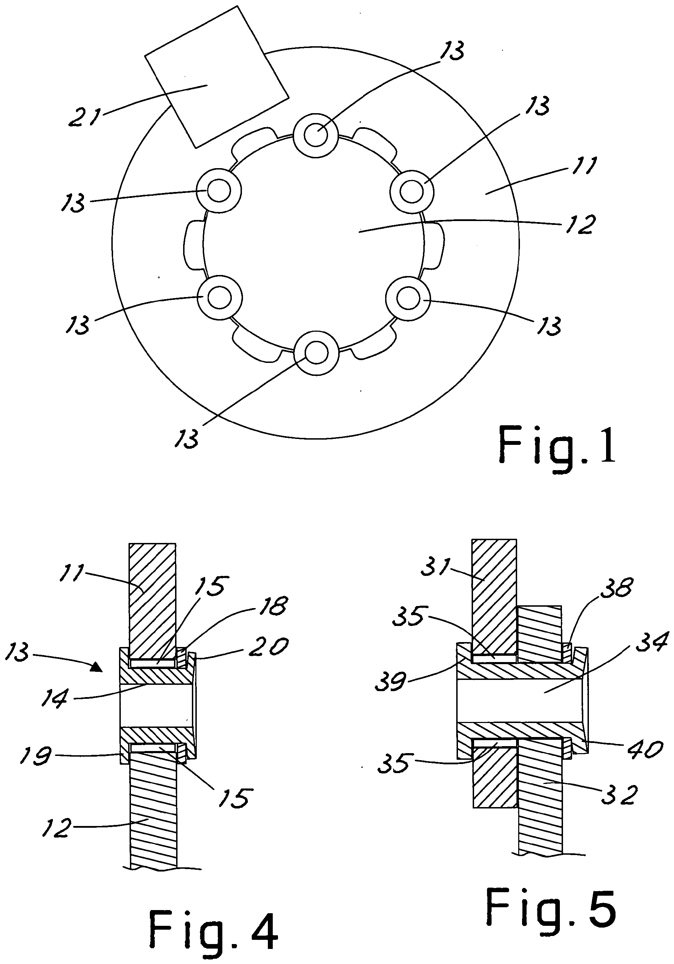

With reference to the figures, in figure 1 there is shown the disc 11 of a disc brake, mounted on an element 12 fixed to the hub of a wheel to be made to brake (not shown in the figure) for example of a motorcycle.

The disc of the brake 11 forms an annular braking track intended to cooperate with the braking pads 21 (shown schematically in the figure) to achieve the braking action of the wheel, according to techniques known in the brakes field.

The disc of the brake 11 has an annular shape and is fixed to the element 12 that is coupled with the wheel by means of a plurality of constraining elements 13 spaced in a regular manner along the internal perimeter of the disc 11.

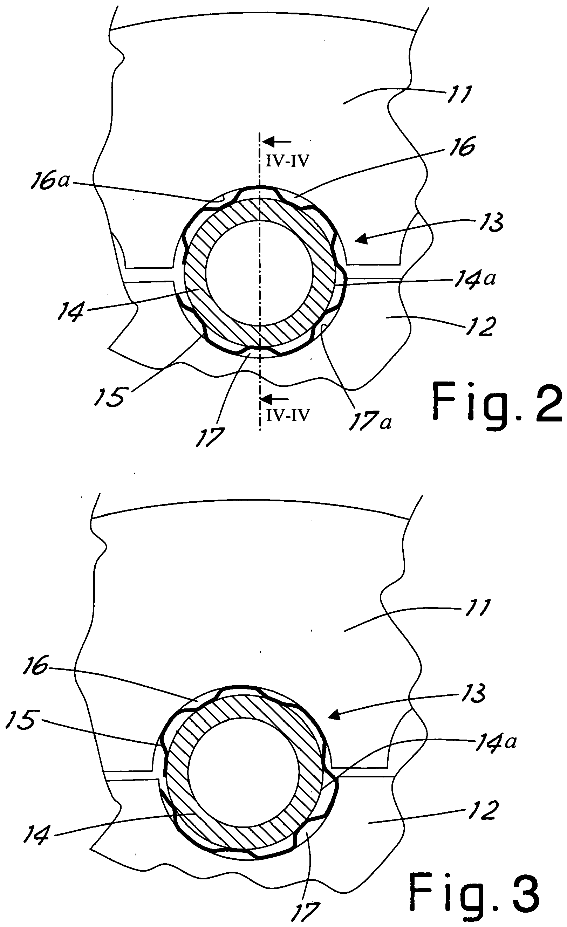

In figure 2 a constraining element 13 between the braking disc 11 and the element 12 coupled with the wheel is shown in detail. The element 13 comprises a pawl 14 (shown in the figure with the head removed) received in a seat defined by an open hollow portion 16 of the disc and by an open hollow portion 17 of the element 12 arranged facing the hollow portion 16 of the disc 11.

Around the side surface 14a of the pawl 14, an elastically deformable annular element 15 is arranged.

The annular element 15 remains interposed between the side wall 14a of the pawl 14 and the wall 16a, 17a of the seat in which the constraining element 13 is received, and according to the invention, ensures constraining of the disc on the hub, whilst enabling the disc to stretch locally between constraint and constraint, assisting the deformation thereof (due for example to thermal or mechanical stress).

In figure 4 a section of the constraining element 13 according to plane IV-IV in figure 2 is shown. The pawl 14 (or "pin"), made in the shape of a hollow cylinder, is provided at the ends with a head 19 and with a head 20 for achieving the constraint between the disc 11 and the element 12 in a direction that is perpendicular to the disc of the brake.

According to prior-art solutions, the second head 20 of the pawl 14 could be obtained by riveting, for example with the interposing of a washer 18 between the head 20 and the wall of the disc brake. As an alternative to riveting the head, to make the constraint in the direction that is axial to the pawl, a clip or Seeger ring could be applied to the pawl, according to known solutions in the field of disc brakes.

In an embodiment of the invention, the annular element 15 is made from a band of elastic metal material (see figure 2).

The band 15, sectioned on a plane parallel to the disc, has an undulating pattern to alternatively touch the wall of the seat 16a, 17a and the side wall 14a of the pawl 14.

As shown in the figure, the band 15 is such as to touch at at least three different points the wall 16a of the hollow portion 16 of the disc and at at least three points the wall 17a of the hollow portion 17 of the element 12.

According to what is shown in figure 2, in the rest position with the annular element in the non-deformed position, the pawl 14 (cylindrical in shape) is coaxial to the generally cylindrical seat formed by the hollow portions 16 and 17. Furthermore, the disc 11 is not in direct contact with the element 12, there being a small gap between the two elements. It should be noted that "generally cylindrical seat" also refers to seats that have a certain degree of conicity, due, for example, to blanking of the seats.

Advantageously, the band 15 does not surround the pawl 14 along its entire side surface 14a, but has a notch that is longitudinal to the axis of the pawl. This solution enables the band 15 to extend along the perimeter of the pawl 14 when it is compressed and deformed during a corresponding movement between the hollow portion 16 of the disc 11 and the hollow portion 17 of the element 12 or when the constraining element is inserted into its seat by pressing it to impose the necessary preload on the elastic band.

As already mentioned, the disc 11 of the brake is in fact subjected to considerable mechanical and thermal stress due to the action of friction braking on the braking track. The stresses can cause local stretching of the disc 11 that vary the distances between two adjacent hollow portions 16 and 17 intended for constraining the disc on the hub.

The annular elastic element 15 absorbs this stretching, enabling reciprocal movement between the hollow portion 16 and the element 12, preventing curving of the disc.

Figure 3 shows how the band 15 is deformed by local movement of the braking track 11 to the left.

The band 15 acts elastically and, when thermal-mechanical stress has terminated, recovers the original position in figure 2, preventing the occurrence of deformation of a permanent type on the disc.

The elastic action of the annular element 15 enables all the mechanical and thermal stretching generated by braking on the disc 11 to be absorbed, thus ensuring the planarity of the disc in all work conditions.

It should be noted that the annular element enables stress from different angular tilts (both radial and tangential or combinations of the two) to be absorbed.

Figure 5 shows an alternative embodiment of the present invention, where the pawl 34 is received in a generally cylindrical seat defined by a pair of aligned coaxial closed holes respectively obtained on the element coupled with the wheel 32 and on the disc of the brake 31.

The pawl 34, as in the preceding case, is provided with a first head 39 and with a riveted head 40 for ensuring the constraint between disc and hub in an axial direction.

A washer 38 can be arranged between the riveted head 40 and the element 32, according to known techniques in the field of disc brakes.

In the embodiment in figure 5 the annular elastic element 35, shown schematically in the figure, surrounds the pawl 34 only on the part thereof received in the hole on the disc 31. In this way the pawl is rigidly constrained on the element 32, but the disc 31 has a small degree of freedom compared with the pawl, being able to "fluctuate" around the latter, exploiting the deformability of the annular element 35.

It should be noted that the element 35 could be made with an undulating band completely similar to the band disclosed for the main embodiment in figure 2.

At this point it is clear how the objects of the present invention have been achieved.

A brake has in fact been provided that is provided with constraining elements fixing the disc of the brake to the wheel to be made to brake that enable the disc to stretch locally between constraint and constraint without undergoing deformation of a permanent nature and without losing planarity.

Lastly, a constraining element has been provided that dampens all the vibration that may be induced on the disc and considerably limits the noise from rolling of the brake.

Naturally, the above disclosure of an embodiment applying the innovative principles of the present invention is provided by way of example of such principles and must not therefore be taken to limit the scope of the invention claimed herein. The longitudinal notch formed in the elastic band could also not be rectilinear, but could be V-shaped, in order to obtain continuous contact between the wall of the seat and the band along the entire perimeter of the pawl.

The band may also be peripherally continuous, so without the interruption created by the longitudinal notch, in particular if the radial undulations thereof are accentuated to the point of any way conferring the necessary deformability on the ring.

## Claims

1. Brake for vehicle wheels comprising a first element (12) coupled with the wheel and a second element (11) comprising an annular strip on which braking pads act, said first and second element having respective hollow portions (17, 16) designed to correspond in pairs for forming housing seats for constraining elements (13), each of said constraining elements consisting of a substantially cylindrical pin (14) around the side surface (14a) of which an elastically deformable annular element (15) is arranged to remain interposed, with mutual contact, between the wall of the seat and the side wall (14a) of the pin,
wherein said hollow portions are open concavities (16, 17) designed to be faced one another in pairs to define a hole that makes said housing seat for the constraining element, said first (12) and second (11) elements being separated by a gap so as not to be in contact with each other, thereby enabling mutual movements between said faced open concavities (16, 17),
**characterised in that**
said elastically deformable annular element (15) is made of an elastic band having an undulated profile in a section according to a plane perpendicular to the axis of the pin for alternately resting on the wall (16a, 17a) of the open concavities (16, 17) forming said housing seat and on the side wall (14a) of the pin (14).

2. Brake according to claim 1, **characterized in that** said seat is a through hole and the constraining element (14) is provided with a head on each of the two ends protruding on opposite sides of the seat, to make the connection between the first and the second element in an axial direction in relation to the pin.

3. Brake according to claim 2, **characterized in that** a head is obtained for riveting the pin inserted into the seat.

4. Brake according to claim 1, **characterized in that** said band (15) has six points of contact with the wall of the seat and six points of contact with the side surface of the pin (14).

5. Brake according to claim 1, **characterized in that** said band (15) has a notch longitudinally to the pin to enable the tangential expansion of the band (15) along the perimeter of the pin (14) through radial deformation within the seat.

6. Brake according to claim 1, **characterized in that** the elastic band (15) is made of metal material.

7. Brake according to claim 1, **characterized in that** said seat is generally circular cylindrical.

8. Brake according to claim 1, **characterized in that** said pin is circular cylindrical.

9. Brake according to claims 7 and 8, **characterized in that** when the annular element (15) is in the non-deformed position the pin (14) is coaxial to said seat.

10. Brake according to claim 1, **characterized in that** the two brake elements are not in direct contact with one another when the annular elastic element (15) is in the non-deformed position.

11. Brake according to claim 1, **characterized in that** the second element of the brake is a disc.

12. Brake according to claim 1, **characterized in that** the first element of the brake is fixed to the hub of the wheel to be made to brake.

13. Brake according to claim 2, **characterized in that** a head of the pin is obtained by applying a clip or a Seeger ring to the pin.

14. Brake according to claim 5, **characterized in that** the longitudinal notch in the elastic band is V-shaped, to ensure the continuity of the contact between the wall of the seat and the band along the perimeter of the pin.

15. Brake according to claim 1, **characterized in that** the band has a continuous profile for surrounding the side wall of the pin without interruptions or notches.

## Patentansprüche

1. Bremse für Fahrzeugräder, umfassend ein erstes, an das Rad gekuppelte Element (12) und ein zweites Element (11), welches einen ringförmigen Streifen umfasst, auf welchen Bremsbeläge wirken, wobei das erste und das zweite Element jeweils hohle Abschnitte (17, 16) aufweisen, die dazu bestimmt sind, paarweise zu korrespondieren, um Aufnahmesitze für Haltemittel (13) zu bilden, wobei jedes der Haltemittel aus einem im Wesentlichen zylindrischen Stift (14) besteht, um dessen Seitenfläche (14a) ein elastisch verformbarer Ring (15) angeordnet ist, um bei gegenseitigem Kontakt zwischen der Wand des Sitzes und der Seitenwand (14a) des Stifts eingesetzt zu bleiben, wobei die hohlen Abschnitte offene Vertiefungen (16, 17) sind, die dazu bestimmt sind, einander paarweise zugewandt zu sein, um ein Loch zu definieren, das den Aufnahmesitz für das Haltemittel bildet, wobei das erste (12) und das zweite (11) Element durch einen Zwischenraum getrennt sind, um nicht miteinander in Kontakt zu sein und dadurch gegenseitige Bewegungen zwischen den gegenüberliegenden, offenen Vertiefungen (16, 17) zu ermöglichen,
**dadurch gekennzeichnet, dass**
der elastisch verformbare Ring (15) aus einem elastischen Band besteht, das ein wellenförmiges Profil in einem Abschnitt aufweist, der einer Ebene entspricht, die senkrecht zur Achse des Stifts verläuft, um abwechslungsweise an der Wand (16a, 17a) der den Aufnahmesitz bildenden, offenen Vertiefungen (16, 17) und an der Seitenwand (14a) des Stifts (14) anzuliegen.

2. Bremse nach Anspruch 1, **dadurch gekennzeichnet, dass** der Sitz ein Durchgangsloch ist und das Haltemittel (14) an jedem der beiden, auf den gegenüberliegenden Seiten des Sitzes auskragenden Enden mit einem Kopf versehen ist, um die Verbindung zwischen dem ersten und dem zweiten Element in axialer Richtung in Bezug auf den Stift herzustellen.

3. Bremse nach Anspruch 2, **dadurch gekennzeichnet, dass** ein Kopf herausgearbeitet ist, um den in den Sitz eingefügten Stift zu vernieten.

4. Bremse nach Anspruch 1, **dadurch gekennzeichnet, dass** das Band (15) sechs Kontaktpunkte mit der Wand des Sitzes und sechs Kontaktpunkte mit der Seitenfläche des Stifts (14) aufweist.

5. Bremse nach Anspruch 1, **dadurch gekennzeichnet, dass** das Band (15) eine Aussparung längs des Stifts aufweist, um die tangentiale Ausdehnung des Bandes (15) entlang des Umfangs des Stifts (14) durch radiale Verformung innerhalb des Sitzes zu ermöglichen.

6. Bremse nach Anspruch 1, **dadurch gekennzeichnet, dass** der elastische Ring (15) aus einem metallischen Material besteht.

7. Bremse nach Anspruch 1, **dadurch gekennzeichnet, dass** der Sitz im Allgemeinen kreiszylindrisch ist.

8. Bremse nach Anspruch 1, **dadurch gekennzeichnet, dass** der Stift kreiszylindrisch ist.

9. Bremse nach Anspruch 7 und 8, **dadurch gekennzeichnet, dass** der Stift (14), wenn der Ring (15) sich in nicht verformter Stellung befindet, koaxial mit dem Sitz ist.

10. Bremse nach Anspruch 1, **dadurch gekennzeichnet, dass** die beiden Bremselemente sich nicht in direktem Kontakt zueinander befinden, wenn der Ring (15) sich in nicht verformter Stellung befindet.

11. Bremse nach Anspruch 1, **dadurch gekennzeichnet, dass** das zweite Element der Bremse eine Scheibe ist.

12. Bremse nach Anspruch 1, **dadurch gekennzeichnet, dass** das erste Element der Bremse an der Nabe des Rades befestigt ist, das zum Bremsen gebracht werden soll.

13. Bremse nach Anspruch 2, **dadurch gekennzeichnet, dass** ein Kopf des Stifts durch Anordnen einer Klammer oder eines Seegerrings an dem Stift herausgearbeitet ist.

14. Bremse nach Anspruch 5, **dadurch gekennzeichnet, dass** die längslaufende Aussparung in dem elastischen Band V-förmig ist, um einen ununterbrochenen Kontakt zwischen der Wand des Sitzes und dem Band entlang des Umfangs des Stifts zu gewährleisten.

15. Bremse nach Anspruch 1, **dadurch gekennzeichnet, dass** das Band ein Endlosprofil aufweist, um die Seitenwand des Stifts ohne Unterbrechungen oder Aussparungen zu umgeben.

## Revendications

1. Frein pour des roues de véhicule, comprenant un premier élément (12) couplé avec la roue et un deuxième élément (11) comprenant une bande annulaire sur laquelle des plaquettes de frein agissent, lesdits premier et deuxième éléments ayant des portions creuses respectives (17, 16) conçues pour correspondre par paires pour former des sièges de logement pour des éléments de retenue (13), chacun desdits éléments de retenue consistant en une broche sensiblement cylindrique (14) autour de la surface latérale (14a) de laquelle est agencé un élément annulaire déformable élastiquement (15) pour rester interposé, avec contact mutuel, entre la paroi du siège et la paroi latérale (14a) de la broche, dans lequel lesdits portions creuses sont des concavités ouvertes (16, 17) conçues pour être en face l'une de l'autre par paires pour définir un trou qui réalise ledit siège de logement pour l'élément de retenue,
lesdits premier (12) et deuxième (11) éléments étant séparés par un espace tel qu'ils ne soient pas en contact l'un avec l'autre, en permettant ainsi des mouvements réciproques entre lesdites concavités ouvertes situées en face (16, 17), **caractérisé en ce que** ledit élément annulaire déformable élastiquement (15) est constitué d'une bande élastique ayant un profil ondulé dans une section suivant un plan perpendiculaire à l'axe de la broche pour s'appuyer alternativement sur la paroi (16a, 17a) des concavités ouvertes (16, 17) formant ledit siège de logement et sur la paroi latérale (14a) de la broche (14).

2. Frein selon la revendication 1, **caractérisé en ce que** ledit siège est un trou passant et l'élément de retenue (14) est muni d'une tête sur chacune des deux extrémités faisant saillie sur des côtés opposés du siège, pour réaliser la connexion entre le premier et le deuxième élément dans une direction axiale par rapport à la broche.

3. Frein selon la revendication 2, **caractérisé en ce qu'**une tête est obtenue pour riveter la broche insérée dans le siège.

4. Frein selon la revendication 1, **caractérisé en ce que** ladite bande (15) a six points de contact avec la paroi du siège et six points de contact avec la surface latérale de la broche (14).

5. Frein selon la revendication 1, **caractérisé en ce que** ladite bande (15) comporte une encoche longitudinalement par rapport à la broche pour permettre la dilatation tangentielle de la bande (15) suivant le périmètre de la broche (14) par le biais d'une déformation radiale à l'intérieur du the siège.

6. Frein selon la revendication 1, **caractérisé en ce que** la bande élastique (15) est constituée de matériau métallique.

7. Frein selon la revendication 1, **caractérisé en ce que** ledit siège est généralement cylindrique circulaire.

8. Frein selon la revendication 1, **caractérisé en ce que** ladite broche est cylindrique circulaire.

9. Frein selon les revendications 7 et 8, **caractérisé en ce que**, quand l'élément annulaire (15) est dans la position non déformée, la broche (14) est coaxiale audit siège.

10. Frein selon la revendication 1, **caractérisé en ce que** les deux éléments de frein ne sont pas en contact direct l'un avec l'autre quand l'élément annulaire élastique (15) est dans la position non déformée.

11. Frein selon la revendication 1, **caractérisé en ce que** le deuxième élément du frein est un disque.

12. Frein selon la revendication 1, **caractérisé en ce que** le premier élément du frein est fixé au moyeu de la roue à freiner.

13. Frein selon la revendication 2, **caractérisé en ce qu'**une tête de la broche est obtenue en appliquant un clip ou un anneau Seeger sur la broche.

14. Frein selon la revendication 5, **caractérisé en ce que** l'encoche longitudinale dans la bande élastique est en forme de V, pour garantir la continuité du contact entre la paroi du siège et la bande suivant le périmètre de la broche.

15. Frein selon la revendication 1, **caractérisé en ce que** la bande a un profil continu pour entourer la paroi latérale de la broche sans interruptions ou encoches.
